# EUROPÄISCHE PATENTSCHRIFT

(11) **EP 3 075 226 B1**
(45) Veröffentlichungstag und Bekanntmachung des Hinweises auf die Patenterteilung: **18.04.2018**
(21) Anmeldenummer: 16162533.0
(22) Anmeldetag: 29.03.2016
(51) Int. Cl.: A01F 12/00, A01F 12/18, A01F 12/24, A01F 12/26, A01F 12/28

(54) **DRESCH- ODER SEPARIERKORB MIT WENIGSTENS EINEM DEMONTIERBAREN EINSATZ**
THRESHING OR SEPARATING BASKET WITH AT LEAST ONE DECONSTRUCTABLE INSERT
PANIER DE BATTAGE OU DE SÉPARATION DÔTÉ D'AU MOINS UN INSERT DÉMONTABLE

(30) Priorität: 02.04.2015 DE 102015205992
(43) Veröffentlichungstag der Anmeldung: 05.10.2016
(73) Patentinhaber: Deere & Company, Moline, IL 61265 (US)
(72) Erfinder: Hess, Wolfgang, 66877 Ramstein (DE); Broschart, Marco, 66919 Herschberg (DE)
(74) Vertreter: Holst, Sönke

(56) Entgegenhaltungen:
- EP-A1- 1 159 867
- EP-A1- 2 457 434
- EP-A2- 1 059 023
- US-A- 4 711 075
- US-B1- 6 358 142

## Beschreibung

Die Erfindung betrifft einen Dresch- oder Separierkorb, an dem ein Einsatz mit einem Siebbelag lösbar fixiert werden kann, ein Dreschwerk und einen Mähdrescher mit einem derartigen Dresch- oder Separierkorb.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Zum Dreschen dienen in der Regel Tangentialdrescheinrichtungen mit einem Dreschkorb und einer das Erntegut tangential fördernden Dreschtrommel oder das Erntegut axial fördernde Axialdrescheinrichtungen mit Axialdreschrotoren, die ebenfalls mit einem Dreschkorb zusammenwirken. Die Dreschkörbe setzen sich üblicherweise aus äußeren Wangen und parallel dazwischen angeordneten Bogenleisten sowie Dreschleisten zusammen, die zwischen sich Zwischenräume belassen, in denen sich parallel zu den Bogenleisten orientierte Korbdrähte befinden. Der Dreschkorb umgibt die Dreschtrommel über einen Teil ihres Umfangs und schließt mit ihr einen Spalt ein, durch den das zu dreschende Erntegut gezwängt wird. Während das Erntegut durch den Spalt gefördert wird, scheiden sich Erntegutteile (das Korn) ab, fallen durch die Zwischenräume und werden einer Reinigungseinrichtung zugeführt. Aufgrund der Beschaffenheit des Ernteguts lassen sich Bestandteile mehr oder weniger gut herauslösen, so dass es sinnvoll ist, die Dreschkörbe dem jeweiligen Erntegut anpassen zu können, wozu man insbesondere an der Einlassseite des Dreschkorbs austauschbare Einsätze verwendet. Das Dokument US 4 711 075 A offenbart einen Dreschkorb mit einem schwenkbar, zusätzlich einsetzbaren Siebeinsatz, der über eine ebenso schwenkbare Halterung am Dreschkorbrahmen befestigt wird.

Das Dokument EP 1 159 867 A1 beschreibt einen aus mindestens zwei Segmenten bestehenden Dreschkorb. Durch den Austausch einzelnen Segmente lässt sich ohne zusätzliche Justage der optimale Abstand zur Dreschtrommel einstellen.

In der EP 1 059 023 A2 wird ein Mähdrescher mit einem Dreschkorb beschrieben, dessen Belag sich im vorderen Bereich aus drei nebeneinander angeordneten Abschnitten zusammensetzt, denen ein einziges oder drei Siebsegmente folgen. Der mittlere Abschnitt kann nach vorn durch eine Revisionsöffnung entnommen werden. Die anderen Beläge werden dann nacheinander zur Mitte geschoben und ebenfalls nach vorn durch die Revisionsöffnung entfernt. Die Abschnitte werden an ihrem vorderen Ende durch eine angeschraubte Klemmleiste am Dreschkorbrahmen fixiert und untergreifen an ihrem rückwärtigen Ende einen Abschnitt des rückwärtigen Siebsegments oder sind damit drehbar verbunden. Hierbei erweist sich der Ein- und Ausbau der Siebsegmente als relativ zeitaufwändig.

Die EP 1 197 136 A1 beschreibt austauschbare Korbeinsätze, die am stromauf liegenden Ende des Dreschkorbs angeordnet sind und durch Einsätze mit in anderen Abständen positionierten Korbdrähten ausgetauscht werden können. Die Korbeinsätze weisen trapezförmige Korbwangen auf, die in formgleichen Ausnehmungen der Korbwangen des Dreschkorbs aufgenommen werden und durch Haltelaschen damit verbunden werden, indem endseitig in die Haltelaschen eingesteckte Sechskantschrauben in Gewindelöcher in den Korbwangen der Korbeinsätze und in Gewindelöcher in den Wangen des Dreschkorbs eingeschraubt werden. Diese Befestigungsart erfordert einen seitlichen Zugang zum Dreschkorb und ist auf einteilige Korbeinsätze eingeschränkt, die relativ schwer sind.

In der DE 10 2010 061 863 A1 wird ein derartiger Dreschkorb zur Verwendung mit einer Tangentialdreschtrommel beschrieben, der seitliche Wangen und dazwischen angeordnete Bogenleisten umfasst, die durch quer verlaufende Dreschleisten untereinander verbunden sind. Der eingangsseitige Dreschabschnitt wird durch einen herausnehmbaren Einsatz definiert, der durch hakenartige Halterungen am Dreschkorb befestigt werden kann. Die Halterungen sind um eine quer verlaufende Achse drehbar und können zwischen einer den Einsatz am Dreschkorb halternden Position und einer Lösestellung gedreht werden, in der der Einsatz angehoben, d.h. in Richtung auf die Dreschtrommel zu gedreht wird, um ihn dann nach vorn aus dem Dreschkorb herausnehmen zu können. Der Einbau des Einsatzes ist hier insofern problematisch, dass der Bediener beim Einbau den Einsatz in die korrekte Position am Dreschkorb bringen muss, damit er dort von der Halterung erfasst und nach unten in seine Endposition verbracht werden kann. Der Einsatz muss demnach an einer relativ ungünstigen, da schwer zugänglichen Stelle zwischen der Dreschtrommel und dem Dreschkorb korrekt positioniert werden, was relativ umständlich und zeitaufwändig ist.

Bei Axialmähdreschern wurde vorgeschlagen, Dreschkorbsegmente zunächst an Tragelementen einzuhängen und dann durch Verstellen der Tragelemente in radialer Richtung (US 2002/0077162 A1) oder Verschwenken der Tragelemente um eine Achse (US 4 711 252 A1) in die Endposition gegenüber dem Dresch- und Trennrotor zu verbringen. Eine derartige Vorgehensweise ist bei einer Tangentialdreschtrommel kaum möglich, da nur wenig Raum für eine mögliche radiale Bewegung des Einsatzes zur Verfügung steht und somit ein Einhängen oder Einlegen des Einsatzes in radialer Richtung ausscheidet.

### Aufgabe

Die der Erfindung zu Grunde liegende Aufgabe wird darin gesehen, einen Dresch- oder Separierkorb mit einem Einsatz zu schaffen, der auf einfache Weise ein- und ausgebaut werden kann.

### Erfindung

Die vorliegende Erfindung wird durch die Patentansprüche definiert.

Ein Dresch- oder Separierkorb ist mit einer tragenden Struktur, wenigstens einem lösbar an der tragenden Struktur fixierten oder fixierbaren Einsatz mit einem Siebbelag und wenigstens einer an der tragenden Struktur schwenkbar angelenkten Halterung zur lösbaren Aufnahme des Einsatzes ausgestattet. Die Halterung ist gegenüber der tragenden Struktur um eine axial (d.h. quer zur Gutflussrichtung) verlaufende Achse zwischen einer Betriebsposition, in welcher der in der Halterung aufgenommene Einsatz in einer zur Erntegutbearbeitung geeigneten Position an der tragenden Struktur angeordnet ist, und einer Ausbauposition schwenkbar, in welcher der Einsatz in Umfangsrichtung des Dresch- oder Separierkorbs (d.h. zumindest näherungsweise parallel zur Gutflussrichtung) in die Halterung einschiebbar und daraus herausziehbar ist.

Die Halterung ist demnach schwenkbar an der tragenden Struktur des Dresch- oder Separierkorbs befestigt und kann zwischen einer Betriebsposition und einer Ausbauposition verschwenkt werden. Der Einsatz kann, wenn die Halterung sich in der Ausbauposition befindet, ähnlich wie ein Backblech in einen Backofen geschoben und daraus hinaus gezogen wird, in die Halterung eingeschoben und daraus herausgezogen werden. Die Halterung mit dem Einsatz kann nach dem Einschieben des Einsatzes um die axial verlaufende Achse in die Betriebsposition verschwenkt werden. Es findet somit eine kombinierte Einschub- und Schwenkbewegung statt, die dem Bediener den Ein- und Ausbau des Einsatzes erleichtert. Insbesondere muss er beim Einbau nur darauf achten, dass er den Einsatz korrekt an der Halterung platziert. Dieser Schritt findet in der Nähe des Einlasses des Dresch- oder Separierkorbs und somit an einer relativ gut zugänglichen Stelle statt. Die weiteren Schritte laufen unter einer Zwangsführung des Einsatzes durch die Halterung ab und erfordern keine besonders genaue Positionierung des Einsatzes durch den Bediener. Somit findet ein sehr einfacher Ein- und Ausbau des Einsatzes statt.

Vorzugsweise ist die Halterung in der Ausbauposition in den (der Dresch- oder Separiertrommel zugewandten) Innenbereich des Dresch- oder Separierkorbs verschwenkt.

An der tragenden Struktur kann ein Element angebracht werden, das beim Verschwenken der Halterung mit dem darin eingeschobenen Einsatz von der Ausbauposition in die Betriebsposition mit dem Einsatz zusammenwirkt und ihn in Umfangsrichtung des Dresch- oder Separierkorbs in eine Sollposition verschiebt und dort hält. Das Element kann insbesondere eine Schrägung umfassen, die mit einer Dreschleiste oder einem anderen geeigneten Bereich des Einsatzes zusammenwirkt.

Es können zwei oder mehr Halterungen an der tragenden Struktur angebracht und gemeinsam mit einem Stellantrieb zur Verschwenkung zwischen der Ausbauposition und der Betriebsposition gekoppelt sein. Wenn genau zwei Halterungen vorgesehen sind, werden diese an beiden Seiten der tragenden Struktur angebracht und ein einziger Einsatz in sie eingeschoben. Sind drei Halterungen vorgesehen, ist den besagten zwei Halterungen eine dritte Halterung angeordnet, an deren linker und rechter Seite jeweils ein Einsatz eingeschoben werden kann, der außen an einer der ersten bzw. zweiten Halterung gehalten wird. Analog kann eine vierte, fünfte etc. Halterung zwischengeordnet werden, sodass drei oder vier etc. Einsätze seitlich nebeneinander eingeschoben werden können. Eine weitere Ausführungsmöglichkeit ist bei der Verwendung mehrerer Einsätze in axialer Richtung, dass jedem Einsatz ein Halterungspaar mit einem eigenen Stellantrieb zugeordnet ist. Analog könnten in Umfangsrichtung mehrere Einsätze aufeinanderfolgen.

Der beschriebene Dresch- oder Separierkorb kann an einem Tangentialdreschwerk Verwendung finden. Er könnte jedoch auch an einem Axialdresch- und/oder -trennrotor benutzt werden.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung heranzuziehen sind. Es zeigt:
- Fig. 1: eine schematische seitliche Ansicht eines Mähdreschers mit einem Tangentialdreschwerk,
- Fig. 2: eine perspektivische Ansicht des Dreschkorbs des Tangentialdreschwerks mit einem eingebauten Einsatz von vorn und oben,
- Fig. 3: eine perspektivische Ansicht des Dreschkorbs des Tangentialdreschwerks mit einem ausgebauten Einsatz von vorn und oben,
- Fig. 4: eine perspektivische Ansicht des vorderen Bereichs des Dreschkorbs mit einer zum Aufnehmen eines Einsatzes ausgeschwenkten Halterung,
- Fig. 5: einen vertikalen Schnitt durch den vorderen Bereich des Dreschkorbs zur Illustration des Zusammenwirkens des Einsatzes mit einem an der tragenden Struktur des Dreschkorbs angebrachten Element, das zur Positionierung des Einsatzes dient,
- Fig. 6: eine perspektivische Ansicht des Dreschkorbs des Tangentialdreschwerks mit einem eingebauten Einsatz zur Ernte kleiner Körner von vorn und oben, und
- Fig. 7: eine perspektivische Ansicht des Dreschkorbs des Tangentialdreschwerks mit einem eingebauten Einsatz zur Maiskornernte von vorn und oben.

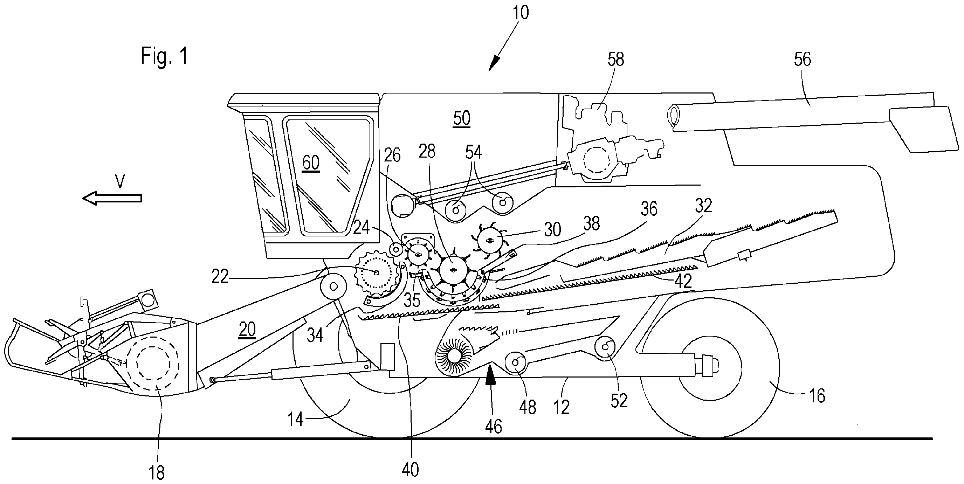

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.
An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung angeordnet, während sich oberhalb der Fördertrommel 26 eine fest stehende Abdeckung und unterhalb des Tangentialseparators 28 ein Separierkorb 36 mit oder ohne verstellbare(n) Fingerelementen befindet. Unterhalb der Wendetrommel 30 ist ein Fingerrechen 38 angeordnet, der auch entfallen könnte.
Das durch den Dreschkorb 34, den Separierkorb 36 und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden.

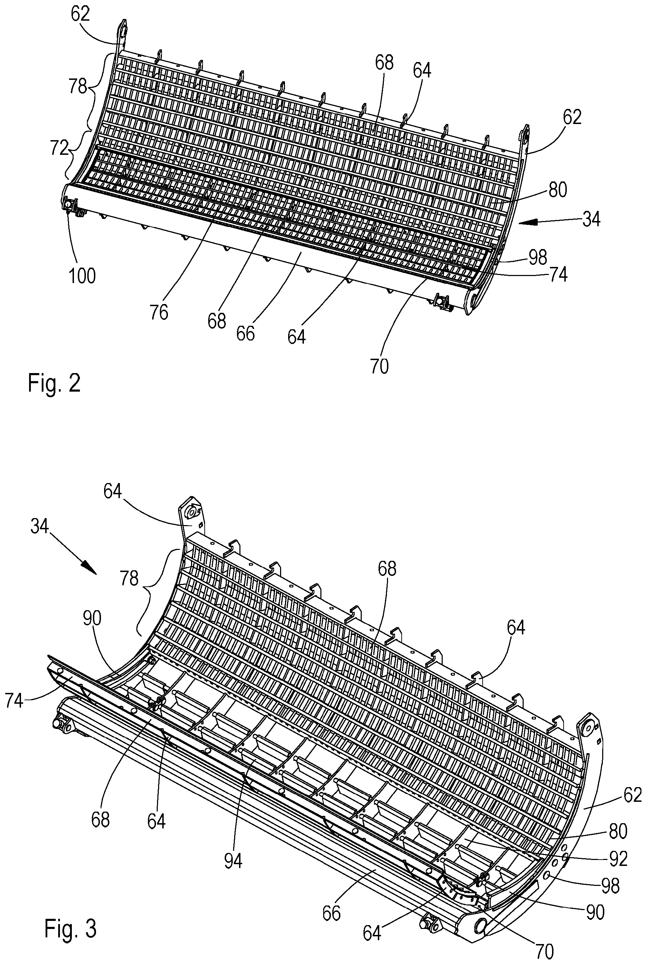

Die Figur 2 zeigt eine perspektivische Ansicht des Dreschkorbs 34 von vorn und schräg oben her betrachtet. Dieser oder ein ähnlicher Dreschkorb könnte auch als Separierkorb 36 verwendet werden. Der in der Gutflussrichtung konkav geformte Dreschkorb 34 umfasst seitliche Wangen 62, die parallel zueinander orientiert und voneinander beabstandet sind. Zwischen den Wangen 62 sind Bogenleisten 64 verteilt, die ebenfalls parallel zueinander und zu den Wangen 62 orientiert und voneinander beabstandet sind. Quer zu den Wangen 62 und Bogenleisten 64, d. h. in axialer Richtung des Dreschkorbs 34, sind Dreschleisten 68 vorgesehen. Die Flussrichtung des Ernteguts ist in der Figur 2 von links unten nach rechts oben gerichtet. Die Wangen 62 und die Bogenleisten 64 bilden gemeinsam mit den fest am Dreschkorb angebrachten Dreschleisten 68 des hinteren Dreschabschnitts 78 eine tragende Struktur des Dreschkorbs 34. Richtungsangaben zum Dreschkorb 34, wie axial und radial, beziehen sich auf die Drehachse der Dreschtrommel 22 und die damit zusammenfallende Symmetrieachse des konkav gekrümmten Dreschkorbs 34. Die Gutflussrichtung entspricht der Umfangsrichtung der Dreschtrommel 22 und des Dreschkorbs 34.

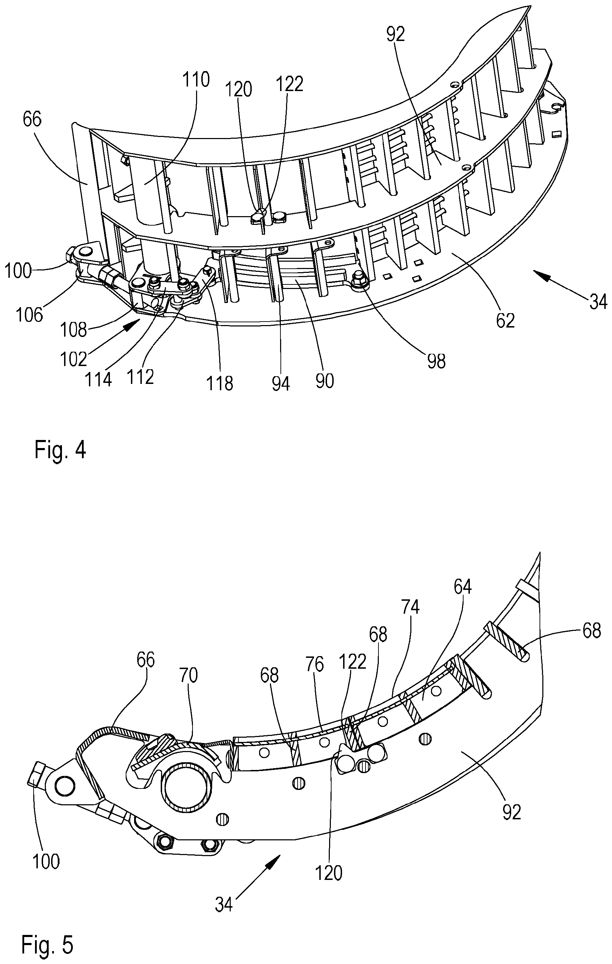

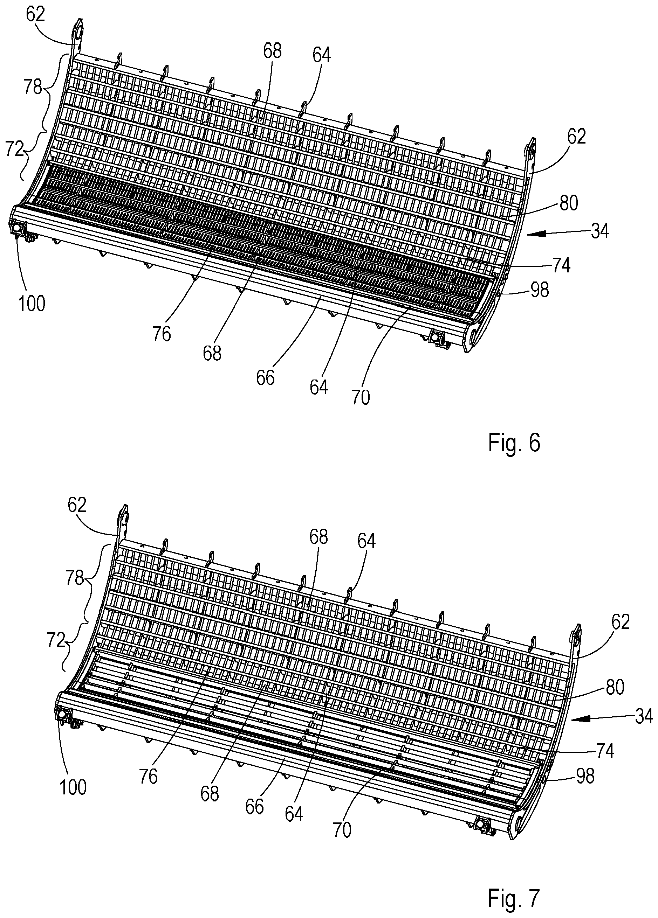

Am in Gutflussrichtung vorderen Ende des Dreschkorbs 34 ist ein konvexes Einlaufblech 66 angebracht, dem eine Reibleiste 70 folgt. Stromab der Reibleiste 70 befindet sich ein vorderer Dreschabschnitt 72, der aus einem einzigen herausnehmbaren und austauschbaren Einsatz 74 aufgebaut ist. Der herausnehmbare Einsatz 74 setzt sich aus einem Rahmen mit sich axial erstreckenden Dreschleisten 68 und sich in Umfangsrichtung des Dreschkorbs 34 erstreckenden Bogenleisten 64 zusammen. Durch die Dreschleisten 68 sind sich in Umfangsrichtung erstreckende Korbdrähte 76 hindurchgeführt, die als Siebbelag dienen. Der herausnehmbare Einsatz 74 kann durch andere Einsätze 74 mit anders dimensionierten Durchlassöffnungen ausgetauscht werden, wie in den Figuren 6 und 7 gezeigt.
Stromab des vorderen Dreschabschnitts 72 befindet sich der hintere, fest mit den Wangen 62 verbundene Dreschabschnitt 78, der durch die sich zwischen den Wangen 62 erstreckende Dreschleisten 68 und durch die Dreschleisten 68 geführte Korbdrähte 80 aufgebaut ist.
In der Figur 3 ist der Dreschkorb 34 mit ausgebautem Einsatz 74 dargestellt. Es ist erkennbar, dass den Bogenleisten 64 der Einsätze 74 in radialer Richtung nach außen jeweils noch Abschnitte 92 der Bogenleisten 64 und Abschnitte 94 der Dreschleisten 68 der tragenden Struktur des eigentlichen Dreschkorbs 34 folgen, um dessen Stabilität sicherzustellen.
Wie in den Figuren 3 und 4 dargestellt ist, ist der Einsatz 74 durch zwei seitliche Halterungen 90 an der tragenden Struktur des Dreschkorbs 34 befestigbar. Diese Halterungen 90 sind jeweils U-förmig mit einander zugewandten Öffnungen, sodass die äußeren Bogenleisten 64 des Einsatzes 74 in die Halterungen 90 eingeschoben werden können, vgl. die Figuren 3 und 4. Es wäre in Umkehrung dieser Anordnung auch denkbar, die Halterung 90 mit einem rechteckigen oder anderen Profil zu versehen, auf das ein U-förmiges oder beliebig geformtes, komplementäres Profil des Einsatzes 74 aufschiebbar ist.
Die Halterungen 90 sind ihrerseits an ihren in Umfangsrichtung des Dreschkorbs 34 hinteren Enden um axial (d.h. quer zur Gutflussrichtung im Dreschbetrieb) verlaufende Drehachsen 98 an den seitlichen Wangen 62 schwenkbar angelenkt. Ein der rechten Wange 62 benachbarter Stellantrieb 100, der hier als Stellschraube ausgeführt ist, ist über eine erste Hebelmechanik 102 mit einer in den Wangen 62 um eine axial verlaufende Drehachse drehbar gelagerten Querwelle verbunden. Die einer ersten (hier der rechten) Wange 62 benachbarte erste Hebelmechanik 102 ist über eine zweite Hebelmechanik 118 mit dem vorderen Ende einer ersten (hier der rechten) Halterung 90 gekoppelt. Die Querwelle steht an der zweiten (hier der linken) Wange 62 über eine dort angeordnete, dritte Hebelmechanik (nicht gezeigt), die zur zweiten Hebelmechanik 118 spiegelsymmetrisch ist, mit der zweiten (hier der linken) Halterung 90 gekoppelt.
Die Stellschraube des Stellantriebs 100 ist drehbar in einer vorderen Halterung 106 gelagert, die über das Einlaufblech 66 mit den Wangen 62 verbunden ist, und greift in ein Gewinde in einem Drehhalter 108 ein, der drehbar um ein (seinerseits drehbar an den Wangen 62 gelagertes) Rohr 110 gelagert ist. Bei dem Rohr 110 handelt es sich um eine Welle oder Drehachse zur Verstellung der Reibleiste 70, vgl. DE 10 2014 224 780 A1. Ein Hebel 112 des ersten Hebeltriebs 102 ist einen Endes an einer mit dem Drehhalter 108 verbundenen Trägerplatte 114 angelenkt und anderen Endes starr mit der Querwelle verbunden. Ein Hebel der zweiten Hebelmechanik 118 ist an der Querwelle befestigt und über einen weiteren Hebel an der Halterung 90 angelenkt.
Durch Drehen des Stellantriebs 100 kann der Bediener somit die Halterungen 90 synchron und parallel zueinander um die Achsen 98 verschwenken.
Nach alledem ergibt sich folgende Vorgehensweise beim Ausbau des Einsatzes 74: zunächst wird der Dreschkorbspalt zwischen der Dreschtrommel 22 und dem Dreschkorb 34 durch geeignete Mittel (nicht gezeigt) auf ein Maximum eingestellt. Dann wird eine Klappe am vorderen Bereich des Mähdreschers 10 geöffnet und/oder der Schrägförderer 20 abgebaut, um Zugang zum Dreschkorb 34 von vorn her zu erhalten. Der Stelltrieb 100 wird betätigt, um die Halterungen 90 in die in den Figuren 3 und 4 gezeigte Ausbauposition zu verbringen. Dann kann der Einsatz 74 nach vorn herausgezogen und durch einen anderen Einsatz 74 (vgl. die Figur 2, in der ein universell verwendbarer Einsatz 74, die Figur 6, in der ein Einsatz für die Ernte relativ kleiner Körner geeigneter Einsatz 74 und die Figur 7, in der ein Einsatz für die Ernte von Maiskörnern gezeigt werden) ausgetauscht werden, z.B. um ein anderes Erntegut zu ernten. Der neue Einsatz 74 wird dazu von vorn in die Halterung 90 eingeschoben, bis er an einen hinteren Anschlag anschlägt. Dann wird wieder der Verstelltrieb 100 betätigt, um die Halterungen 90 mit dem Einsatz aus der in den Figuren 3 und 4 gezeigten Ausbauposition in die in den Figuren 2 und 5 bis 7 gezeigte Betriebsposition zu verbringen, d.h. um die Achsen 98 nach außen zu schwenken.
Bei dieser Schwenkbewegung gerät ein am Abschnitt 92 der Bogenleiste 64 angebrachtes, vom Abschnitt 92 radial nach innen ragendes, mit einer nach hinten und radial nach außen geneigten Schrägung 122 versehenes Element 120 in Anlage mit einer Dreschleiste 68 des Einsatzes 74 und schiebt mit der Schrägung 122 den Einsatz 74 nach hinten in seine Sollposition, vgl. Figur 5, und hält ihn dort fest. Der Einsatz 74 liegt dann mit seiner hintersten Dreschleiste 68 an der vordersten Dreschleiste 68 des hinteren Dreschbereichs 78 an und ist in Umfangsrichtung des Dreschkorbs 34 zwischen der vordersten Dreschleiste 68 des hinteren Dreschbereichs 78 und dem Element 120 eingeklemmt und fixiert.

## Patentansprüche

1. Dresch- oder Separierkorb (34) mit einer tragenden Struktur, wenigstens einem lösbar an der tragenden Struktur fixierten oder fixierbaren Einsatz (74) mit einem Siebbelag und wenigstens einer Halterung (90) zur lösbaren Aufnahme des Einsatzes (74), charakterisiert dadurch, dass die Halterung (90) gegenüber der tragenden Struktur um eine axial verlaufende Achse (98) zwischen einer Betriebsposition, in welcher der in der Halterung (90) aufgenommene Einsatz (74) in einer zur Erntegutbearbeitung geeigneten Position an der tragenden Struktur angeordnet ist, und einer Ausbauposition schwenkbar ist, in welcher der Einsatz (74) entlang der Umfangsrichtung des Dresch- oder Separierkorbs (34) in die Halterung (90) einschiebbar und daraus herausziehbar ist.

2. Dresch- oder Separierkorb (34) nach Anspruch 1, wobei die Halterung (90) in der Ausbauposition in den Innenbereich des Dresch- oder Separierkorbs (34) verschwenkt ist.

3. Dresch- oder Separierkorb (34) nach Anspruch 1 oder 2, wobei die Achse (98) sich am rückwärtigen Ende der Halterung (90) befindet.

4. Dresch- oder Separierkorb (34) nach einem der vorhergehenden Ansprüche, wobei an der tragenden Struktur ein Element (120) angebracht ist, das beim Verschwenken der Halterung (90) mit dem darin eingeschobenen Einsatz (74) von der Ausbauposition in die Betriebsposition mit dem Einsatz (74) zusammenwirkt und den Einsatz (74) in der Umfangsrichtung des Dresch- oder Separierkorbs (34) in eine Sollposition verschiebt und dort hält.

5. Dresch- oder Separierkorb (34) nach Anspruch 4, wobei das Element (120) eine Schrägung (122) umfasst, die mit einer Dreschleiste (68) des Einsatzes (74) zusammenwirkt.

6. Dresch- oder Separierkorb (34) nach einem der vorhergehenden Ansprüche, wobei zwei oder mehr Halterungen (90) an der tragenden Struktur angebracht und gemeinsam mit einem oder jeweils einem eigenen Stellantrieb (100) zur Verschwenkung zwischen der Ausbauposition und der Betriebsposition gekoppelt sind.

7. Dreschwerk, insbesondere Tangentialdreschwerk, mit einer Dreschtrommel (22) oder einem Tangentialseparator (28) und einem damit zusammenwirkenden Dresch- oder Separierkorb (34) nach einem der vorhergehenden Ansprüche.

8. Mähdrescher (10) mit einem Dreschwerk nach Anspruch 7.

## Claims

1. Threshing or separating concave (34), with a supporting structure, at least one insert (74), which is fixed or is fixable releasably to the supporting structure, with a sieve lining, and at least one holder (90) for releasably accommodating the insert (74), **characterized in that** the holder (90) is pivotable about an axially extending axis (98) in relation to the supporting structure between an operating position, in which the insert (74) accommodated in the holder (90) is arranged on the supporting structure in a position suitable for processing crops, and a removal position, in which the insert (74) is pushable along the circumferential direction of the threshing or separating concave (34) into the holder (90) and is pullable out of the latter.

2. Threshing or separating concave (34) according to Claim 1, wherein the holder (90) is pivoted in the removal position into the interior region of the threshing or separating concave (34).

3. Threshing or separating concave (34) according to Claim 1 or 2, wherein the axis (98) is located at the rear end of the holder (90).

4. Threshing or separating concave (34) according to one of the preceding claims, wherein an element (120) is attached to the supporting structure, which element, during the pivoting of the holder (90) with the insert (74) pushed therein from the removal position into the operating position, interacts with the insert (74) and displaces the insert (74) in the circumferential direction of the threshing or separating concave (34) into a desired position and holds said insert there.

5. Threshing or separating concave (34) according to Claim 4, wherein the element (120) comprises an oblique part (122) which interacts with a threshing bar (68) of the insert (74).

6. Threshing or separating concave (34) according to one of the preceding claims, wherein two or more holders (90) are attached to the supporting structure and are coupled together to one actuator (100) or each to a dedicated actuator (100) for the pivoting between the removal position and the operating position.

7. Threshing unit, in particular tangential threshing unit, with a threshing drum (22) or a tangential separator (28) and a threshing or separating concave (34), which interacts therewith, according to one of the preceding claims.

8. Combine harvester (10) with a threshing unit according to Claim 7.

## Revendications

1. Panier de battage ou de séparation (34) comprenant une structure porteuse, au moins un insert (74) fixé ou pouvant être fixé de manière détachable à la structure porteuse, comprenant une toile de criblage et au moins une fixation (90) pour recevoir l'insert (74) de manière amovible,
**caractérisé en ce que**
la fixation (90) peut pivoter par rapport à la structure porteuse autour d'un axe s'étendant axialement (98) entre une position de fonctionnement dans laquelle l'insert (74) reçu dans la fixation (90) est disposé dans une position appropriée pour le traitement de la récolte sur la structure porteuse, et une position de démontage, dans laquelle l'insert (74) peut être enfoncé le long de la direction périphérique du panier de battage ou de séparation (34) dans la fixation (90) et en être ressorti.

2. Panier de battage ou de séparation (34) selon la revendication 1, dans lequel la fixation (90) est pivotée dans la position de démontage dans la région interne du panier de battage ou de séparation (34).

3. Panier de battage ou de séparation (34) selon la revendication 1 ou 2, dans lequel l'axe (98) se trouve à l'extrémité arrière de la fixation (90).

4. Panier de battage ou de séparation (34) selon l'une quelconque des revendications précédentes, dans lequel un élément (120) est monté sur la structure porteuse, lequel, lors du pivotement de la fixation (90) avec l'insert (74) enfoncé dans celle-ci, de la position de démontage dans la position fonctionnelle, coopère avec l'insert (74) et déplace l'insert (74) dans la direction périphérique du panier de battage ou de séparation (34) dans une position de consigne et l'y maintient.

5. Panier de battage ou de séparation (34) selon la revendication 4, dans lequel l'élément (120) comprend un biseau (122) qui coopère avec une barre de battage (68) de l'insert (74).

6. Panier de battage ou de séparation (34) selon l'une quelconque des revendications précédentes, dans lequel deux ou plus de deux fixations (90) sont montées sur la structure porteuse et sont accouplées à un entraînement de commande ou à chaque fois à un entraînement de commande propre (100) pour le pivotement entre la position de démontage et la position fonctionnelle.

7. Mécanisme de battage, en particulier mécanisme de battage tangentiel, comprenant un tambour de battage (22) ou un séparateur tangentiel (28) et un panier de battage ou de séparation (34) coopérant avec celui-ci, selon l'une quelconque des revendications précédentes.

8. Moissonneuse-batteuse (10) comprenant un mécanisme de battage selon la revendication 7.
